# EUROPEAN PATENT APPLICATION

(11) **EP 4 647 594 A1**
(43) Date of publication of application: **12.11.2025**
(21) Application number: 24305720.5
(22) Date of filing: 07.05.2024
(51) Int. Cl.: F02K 9/52

(54) **INJECTOR FACE PLATE, INJECTOR HEAD, THRUST CHAMBER FOR A PROPULSIVE SYSTEM, PROPULSIVE SYSTEM AND METHODS OF MANUFACTURING THEREOF**

(71) Applicant: The Exploration Company, 33700 Merignac (FR)
(72) Inventor: Cruz, Tomas, 33700 MERIGNAC (FR); Crachi, Matteo, 10125 TURIN (IT); Strixner, Maximilian, 82152 PLANEGG (DE)
(74) Representative: Regimbeau

(57) **Abstract**

The invention relates to an injector face plate (3) of an injector head (2) for a propulsive system, wherein the injector face plate (3) comprises a full plate (31) and a three-dimensional structure extending from the full plate (31), the three-dimensional structure comprising a plurality of beams interconnected with each other.

The invention further relates to a corresponding injector head, a thrust chamber for a propulsive system, and the propulsive system itself.

## Description

### FIELD OF THE INVENTION

The present invention relates to injector heads of a rocket engines, and particularly to injector face plates used for liquid propellant rocket engines.

### TECHNICAL BACKGROUND

Propulsive systems are used to propel rockets or more generally spacecrafts, such as space capsules. They usually generate thrust by expelling hot gas obtained by combustion of propellants through a nozzle. The combustion occurs in a thrust chamber assembly comprising a combustion chamber and an injector head comprising a liquid propellant dome containing the propellants and an injector face plate facing the combustion chamber. The propellants, such as liquid fuel and liquid oxidizer, for instance a cryogenic fluid, are mixed and ignited within the combustion chamber before being expelled.

The injector head serves various functions. It distributes the incoming propellants according to the needs of the injectors. More precisely, it is used to uniformly inject liquid propellants into the combustion chamber at the proper oxidizer/fuel mixture ratio, to obtain a successful ignition within the combustion chamber. For instance, mixture ratios can be comprised between 2,0 and 3,8 for methane/oxygen engines, or between 4,5 and 5,5 for hydrogen/oxygen engines.

The injector head is usually made in metal and has a complex geometrical shape, to assure thermal and mechanical performance. A widely used design comprises shear coaxial injectors, allowing to inject high-density and slow liquid jet in a surrounding low-density gas stream. However, such injector heads are sensitive to throttling of coaxial injectors which can lead to reduced combustion performance.

More recently, advanced porous injectors (API) have been developed (see "Propellant Atomization for Porous Injectors - J. C. Deeken, D. I. Suslov - 2019"). These injector heads comprise numerous concentric injector tubes integrated into a porous face plate. The injector tubes are used to expel the high-density liquid propellant, while a low-density gaseous propellant is injected through the porous face plate. The injector face plate is usually made of a high conduction material such as a copper alloy, which requires a multi-material design and a multi-step assembly approach. In many cases, the different elements of the injector head are manufactured and then assembled, for instance through threading or welding, to form the component.

As an alternative, the injector tubes can be drilled into the porous rigid mesh face plate. Overall, many manual working steps are necessary to obtain each injector head, which leads to high costs for manufacturing and integration.

Moreover, head injectors of propulsive systems are subject to very high thermal and mechanical constraints, and suffer from chemical attacks by oxidizer-rich gases.

In particular, the injector face plates must be able to bear the high temperatures (up to 3500K) of the surrounding hot gas. To augment the injector face plate stiffness, the plate thickness is usually increased, which leads to even higher temperatures inside the injector head.

To cool down the injector head, cooling channels can be integrated inside the face plate, to the price of even higher costs of manufacturing and integration time. In the case where the face plate is made of a porous material, a transpiration cooling mechanism can be settled. As an alternative, the number of injector tubes, which behave as coolant colons for the injector face plate, can be increased. However, the number of injectors affects the combustion stability, so it cannot be freely changed. Indeed, it is hard to find a threshold between the diameter of the injector tubes and the momentum flux ratio to obtain desirable injection velocities and efficient combustion inside the combustion chamber.

### SUMMARY OF THE INVENTION

An objective of the present invention is to solve the problem of designing a compact injector head that can resist high temperature without impacting the mechanical resistance, and with a reduced manufacturing cost.

To achieve the aforementioned objective, the present invention provides an injector face plate of an injector head for a propulsive system, characterized in that the injector face plate comprises a full plate and a three-dimensional structure extending from the full plate, the three-dimensional structure comprising a plurality of beams interconnected with each other.

Indeed, the three-dimensional structure can be manufactured in the exact way needed to provide a desired thermal and mechanical behavior.

The three-dimensional structure allows to improve the heat exchange between the injector face plate and the cold propellants contained in the liquid propellant dome. Indeed, the interconnected beams can increase turbulency in the liquid propellant dome and surface area of the injector face plate in contact with the liquid. Increased heat exchange allows to drive out heat from the injector face plate facing the combustion chamber, and therefore lowering its temperature.

Moreover, the three-dimensional structure allows for an improved mechanical resistance and stiffness of the injector face plate without any increase in the thickness. The weight of the resulting injector head can be reduced compared to the ones obtained with conventional designs, which is of high importance for integration into rockets.

By distributing stress more evenly throughout the three-dimensional structure, particularly by relieving stress concentrations in the highest temperature regions, an efficient design of the three dimensional structure effectively reduces the risk of structural failure due to thermal stresses. This is crucial for maintaining the integrity and longevity of the injector head under demanding operating conditions. Furthermore, by equalizing stress levels across the full plate of the injector face plate, the three dimensional structure enhances its overall structural resilience and performance. This ensures that the full plate can withstand thermal and mechanical loads without succumbing to premature failure, thus improving the reliability and efficiency of the injector head.

The invention is advantageously supplemented by the following features, taken individually or in any of their technically possible combinations:
- the injector face plate further comprises a plurality of through holes for liquid propellant injection, each through hole being delimited by a peripheral wall extending from the full plate, respectively, and wherein beams from the three-dimensional structure are connected to the peripheral walls of the plurality of through holes;
- the three-dimensional structure is a lattice structure, the lattice structure comprising a core lattice portion and a plurality of peripheral lattice portions adjacent to the peripheral walls of the through holes, respectively, the core lattice portion being formed by a repetition of elementary lattice elements, each elementary lattice element comprising a plurality of beams interconnected with each other, and the peripheral lattice portions comprising a plurality of peripheral lattice elements having shorter beams than the elementary lattice elements of the core lattice portion;
- the injector face plate has an outer peripheral wall extending from the full plate at a periphery thereof, wherein the lattice structure comprises peripheral lattice portions adjacent to the outer peripheral wall;
- each elementary lattice element fits in a cube, a side of the cube having a length comprised between 1 mm and 10 mm, preferably a length comprised between 2 mm and 5 mm, and more preferably a length of 4 mm;
- each elementary lattice element fits in a cube, a side of the cube having a length being 2 to 5 times larger than a diameter of the beams of the elementary lattice element;
- each elementary lattice element is a unit cell having a structure among a body centered cubic, a face-centered cubic, a dodecahedron or a combination of body centered and face-centered cubic;
- the beams have a diameter comprised between 0.4 mm and 5 mm, preferably a diameter comprised between 0.8 mm and 2mm, and more preferably a diameter of 1 mm;
- the three-dimensional structure is formed within a specific volume being delimited by an inner surface adjacent to the full plate, an outer surface opposed to the inner surface, and a peripheral surface joining the inner surface and outer surface, the plurality of beams interconnected with each other partially filling the specific volume;
- the full plate has a substantially flat outer surface and wherein the outer surface of the three-dimensional structure is non-flat;
- the non-flat outer surface is formed by a plurality of substantially tapered portions;
- the lattice structure comprises a surface lattice portion adjacent to the outer surface of the three-dimensional structure, wherein the surface lattice portion have surface lattice elements having fewer beams than the elementary lattice elements of the core lattice portion;
- the three-dimensional structure comprises a connection portion extending from the full plate, the connection portion having a plurality of connection lattice elements comprising a tapered base extending from the full plate and a plurality of beams extending from the tapered base;
- the plurality of tapered bases of the plurality of connection lattice elements entirely covers the full plate, so as to form a smooth connection between the full plate and the three-dimensional structure;
- the connection lattice elements have the same dimensions as the elementary lattice elements, the beams of the connection lattice elements being arranged with the same orientation as the beams of the elementary lattice elements;
- the three-dimensional structure has a relative density comprised between 0,05 and 0,8, preferably between 0,2 and 0,3;
- the injector face plate is fully obtained by additive manufacturing, preferably by Laser Powder Bed Fusion.

Another aspect of the present invention provides an injector head for a propulsive system, comprising the injector face plate described above and a plurality of injectors arranged through the injector face plate, wherein the injector head is monobloc and fully obtained by additive manufacturing.

Another aspect of the present invention provides a thrust chamber for a propulsive system comprising a combustion chamber, and the above injector head, the full plate of the injector head facing the combustion chamber opposite to the liquid propellant dome.

Another aspect of the present invention provides a propulsive system comprising a liquid propellant tank, a pressurization device, and the above thrust chamber assembly, the pressurization device being configured to inject a propellant stored in the liquid propellant tank into the thrust chamber.

The present invention also concerns a method of designing an injector face plate described above, comprising the steps of:
- defining a bounding domain, corresponding to the injector face plate,
- filling the bounding domain with a full plate and a plurality of beams interconnected with each other,
- defining a cutting domain, corresponding to injectors to be arranged through the injector face plate,
- cutting all beams and portions of the full plate extending in the cutting domain,
- outputting a design of the injector face plate.

The present invention also concerns a method of manufacturing an injector head for a propulsive system, wherein the injector head comprises an injector face plate and a plurality of injectors arranged through the injector face plate, wherein the injector head is fully obtained by additive manufacturing by using the design of the injector face plate obtained by the designing method above.

### BRIEF DESCRIPTION OF THE DRAWINGS

Figure 1 is a schematic representation of a propulsive system comprising a thrust chamber assembly according to an embodiment of the present invention.
Figure 2 is a schematic representation of a thrust chamber assembly according to an embodiment of the present invention.
Figure 3 is a cut illustrating an injector head for a liquid engine in a first embodiment.
Figure 4 is a schematic representation of the lattice structure of an injector face plate in a second embodiment.
Figure 5 is a schematic representation of the lattice structure of an injector face plate in a third embodiment.
Figure 6 is a view illustrating a lattice element of a core lattice portion.
Figure 7 is a view illustrating a lattice element of a surface lattice portion.
Figure 8 is a view illustrating a lattice element of a connection portion.
Figure 9 is a chart illustrating the steps of a method of designing an injector face plate according to an embodiment of the present invention.
Figure 10 is a view of a bounding domain generated after a step of a method of designing an injector face plate according to an embodiment of the present invention.
Figure 11 is a view of a cutting domain generated after a step of a method of designing an injector face plate according to an embodiment of the present invention.
Figure 12 is a view illustrating a design of an injector face plate outputted by the method according to an embodiment of the present invention.

### DETAILED DESCRIPTION OF EMBODIMENTS

Propulsive systems 100 are currently used to propel launchers such as rockets or spacecrafts such as space capsules or un-manned missiles.

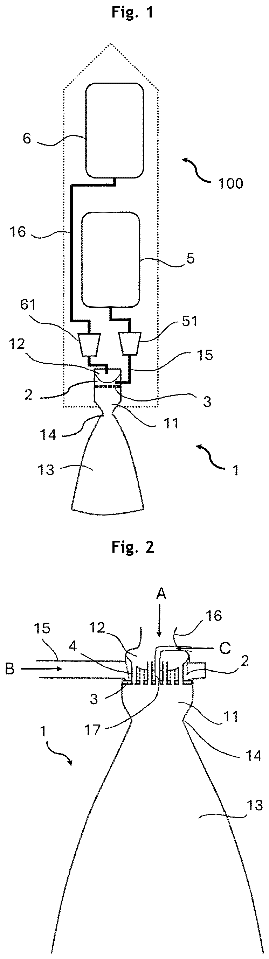

As schematically illustrated in figure 1, a propulsive system 100 comprises a thrust chamber 1. The thrust chamber 1 comprises a combustion chamber 11 and a thrust nozzle 13. Propellants are injected in the combustion chamber 11 where they are mixed and burned. The combustion produces exhaust gas at high temperature and pressure. The exhaust gas is passed through a throat 14 and then expelled through a thrust nozzle 13.

The thrust chamber 1 is configured to generate thrust by efficiently converting the propellant chemical energy into hot gas kinetic energy, by combustion of the propellants in the combustion chamber 11, before acceleration of the hot gas through the thrust nozzle 13.

The propulsive system 100 may comprise devices for propellant delivery. The devices for propellant delivery receive the liquid propellants from a tank at low pressure and supply them to the combustion chamber 11 at the required flow rate and injection pressure.

For instance, the propulsive system 100 comprises a first tank 5 and a second tank 6, storing propellants. The first tank 5 may contain a fuel such as methane. The fuel is pumped through a first pipe 15 using a first pump 51. It might be injected in a gaseous state. The second tank 6 may contain an oxidizer such as liquid oxygen (LOX). The oxidizer is pumped through a second pipe 16 using a second pump 61. The first pump 51 and the second pump 61 raise the pressure before the fuel (flow B) and oxidizer (flow A) enter the combustion chamber 11, respectively. More generally, the propulsive system 100 may comprise a plurality of tanks. It allows for better space arrangement and center of mass.

The propulsive system 100 may comprise driving gas generators, which are not represented here. The driving gas generator (or preburner) aims at delivering a sufficient amount of propellant gas at a designed pressure and temperature in order to guarantee a continuous propellant supply of the thrust chamber 1. Alternatively, the propulsive system 100 may comprise at least one electric motor driving the pumps 51,52. Indeed, the amount of thrust produced by the propulsive system 100 depends on the mass flow rate entering the combustion chamber 11, the exhaust gas velocity and the pressure of the exhaust gas exiting the thrust nozzle 13.

The propulsive system 100 may employ regenerative cooling, that is the fuel can circulate around the thrust nozzle 13 and the combustion chamber 11 to cool the combustion chamber 11 and thrust nozzle 13.

In reference to figure 2, the oxidizer and the fuel are injected into the combustion chamber 11 through an injector head 2.

The injector head 2 comprises a liquid propellant dome 12 and an injector face plate 3 separating the liquid propellant dome 12 from the combustion chamber 11. In a case where the propulsive system 100 comprises a plurality of propellants, the injector head 2 may comprise a plurality of respective propellant domes.

The injector head 2 comprises a plurality of injectors 4. The injector head 2 is configured to distribute the incoming propellants (arrows A and B) according to the needs of the injectors 4. More precisely, the injector head 2 is used to uniformly inject liquid propellants into the combustion chamber 11 at a proper oxidizer/fuel mixture ratio, to obtain a successful ignition within the combustion chamber 11.

The injectors 4 may be advantageously laid out so that a fuel-rich layer is created on the walls of the combustion chamber 11. This reduces the temperature on the walls, and downstream to the throat 14 and into the thrust nozzle 13, permitting the combustion chamber 11 to be run at higher pressure. This allows to use a thrust nozzle 13 with a higher expansion ratio, and to improve the performance of the propulsive system 100.

The injector head 2 may comprise an igniter 17, from where combustion products are injected inside the combustion chamber 11 (arrow C). A flame at the end of the igniter 17 may allow to ignite the mixed propellants.

The injector face plate 3 facing the combustion chamber 11 is subject to very high temperature and mechanical constraints. Indeed, the temperature of the hot gases might reach temperatures between 3500K and 3700K for methane/oxygen engines, or between 3700K and 4000K for hydrogen/oxygen engines.

In particular, the injection head 2 and the face plate 3 are usually made of metallic alloys, for instance a nickel-chromium-based superalloy such as Inconel ^{®}. The material properties of the components may deteriorate at high temperature, for instance decrease rapidly for temperatures above 1100K. It is therefore of paramount importance to keep the temperature of the components below this value.

Mechanical constraints may come from the high temperature gradient, since the fuel, such as methane, is injected around 300K, and the oxidizer might be a cryogenic liquid. On top of thermal challenges, the pressure against the injector face plate 3 may reach high values, for instance around 30 bar.

As known per se, the thickness of the injector face plate 3 might be increased to withstand the mechanical load. However, this solution also leads to higher temperature of the injector face plate 3, since the dissipation is reduced.

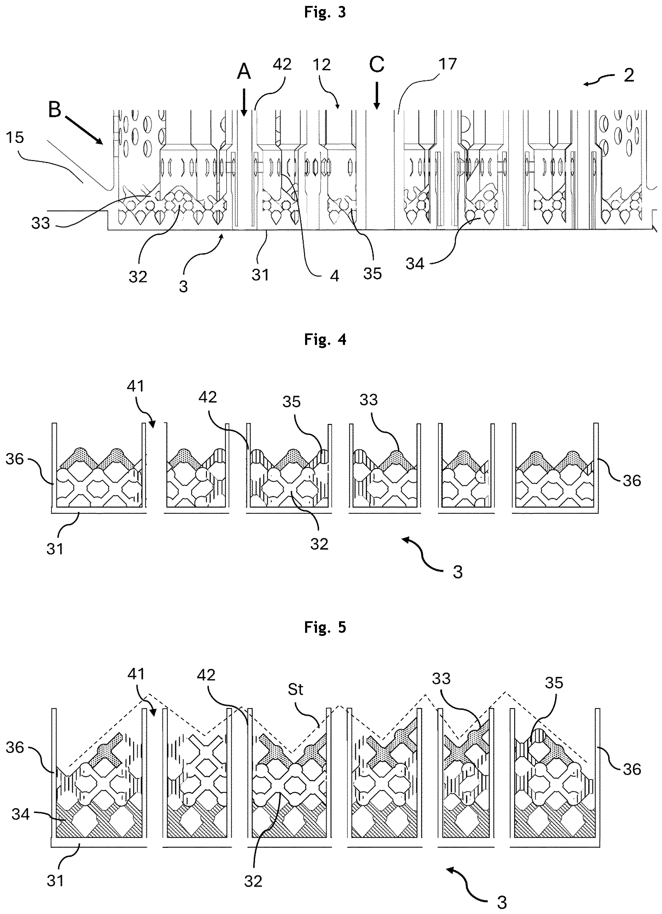

To enhance the cooling efficiency, it is proposed a particular design of an injector face plate 3 of an injector head 2 for a propulsive system 100, the injector face plate 3 having the specificity to comprise a full plate 31 and a three-dimensional structure extending from the full plate 31, the three-dimensional structure comprising a plurality of beams 72 interconnected with each other. The injector head 2 in a preferred embodiment is illustrated in figure 3.

By `full' plate, it is understood a plate being substantially non-porous, made from a material and density that do not allow liquid or gas to pass through the plate itself. Of course, as will be described in more details below, some holes are made through the full plate to enable injection of the propellant through the injector face plate.

The presence of a three-dimensional structure made of a plurality of beams significantly increases the total surface area that is in contact with the fluid in the liquid propellant dome 12, compared to planar or flat injector face plates usually used. It contributes to highly enhancing heat transfer.

The pattern formed by the interconnected beams of the three-dimensional structure also creates interactions with the fluid in the liquid propellant dome 12, that are advantageous for reducing the temperature of the face plate 3. Indeed, the fluid flow in the injector head 2 is more turbulent, which increases the thermal convection. There is no need to use active cooling systems.

Additionally, the three-dimensional structure also provides enhanced mechanical behaviour. The mechanical properties can be demonstrated by tensile testing. Consequently, the thickness of the full plate 31 of the injector face plate 3 with a three-dimensional structure can be reduced and still withstand the same mechanical load. It allows manufacturing a more compact and lighter injector face plate 3 and therefore a more compact and lighter injector head 2. The three-dimensional structure volume, being mainly constituted of empty space, points towards lightweight design. It also helps reducing the thermal constraints since the injector face plate 3, notably the full plate 31, can be cooled more easily.

For instance, the thickness of the full plate 31 can be less than 3 mm, preferably less than 1,5 mm. Preferably, the thickness of the three-dimensional structure is comprised between 4 mm and 16 mm, more preferably less than 8 mm. The ratio between the thickness of the full plate and the thickness of the three-dimensional structure is preferably comprised between 0,15 and 0,25, more preferably less than 0,18.

Preferably, the three-dimensional structure has a void-to-fill ratio comprised between 20% and 95%, preferably between 70% and 80%. Defining a virtual volume of the three-dimensional structure as the smallest volume wherein the three-dimensional structure fits, that is the volume comprised between the outer surfaces of the three-dimensional structure, the void-to-fill ratio corresponds to the ratio between the volume of void in the virtual volume, and the volume of the virtual volume.

In other words, the three-dimensional structure may have a relative density comprised between 0,05 and 0,8, preferably between 0,2 and 0,3, typically 0,26. The relative density corresponds to the volume of the interconnected beams in the three-dimensional structure, divided by the volume of the virtual volume of the three-dimensional structure. Since the virtual volume of the three-dimensional structure is the sum of the volume of the interconnected beams and the volume of void in the virtual volume, the relative density is here equal to one minus the void-to-fill ratio defined above. The relative density value is obtained when excluding a central portion of the injector face plate 3 around the igniter 17.

In the embodiment where the three-dimensional structure is a lattice structure made of elementary lattice elements fitting in a cube with side length equal to the cell dimension, the void-to-fill ratio is defined as the volume of empty space divided by the volume of the cube, while the relative density is defined as the ratio between the volume of the elementary lattice element and the volume of the cube.

All in all, the lattice structure offers a stronger mechanical behavior which enables to operate at higher pressures, while allowing for a reduced weight.

In the injector face plate 3, the three-dimensional structure may delimit channels for injection of the propellants inside the combustion chamber 11, while preventing flow of the propellants on the entire surface of the injector face plate 3.

The full plate 31 of the injector face plate 3 comprises a plurality of holes for liquid propellant injection inside the combustion chamber 11. The holes delimit an end of the injectors 4.

Preferably, the injector face plate 3 further comprises a plurality of through holes 41 for liquid propellant injection. Each through hole 41 is delimited by a peripheral wall 42 extending from the full plate 31, respectively. The beams from the three-dimensional structure are connected to the peripheral walls 42 of the plurality of through holes 41.

The three-dimensional structure formed by the interconnected beams may resemble a structured mesh. Alternatively, it may resemble an unstructured mesh. In this case, the interconnected beams may have an irregular arrangement and can be of any shape and size, as long as the injector face plate 3 can be manufactured and can withstand the thermos-mechanical constraints.

In one embodiment, the three-dimensional structure is a lattice structure. In a view of structure design, the lattice structure comprises a core lattice portion 32 formed by a repetition of elementary lattice elements 7, also known as unit cells. Each elementary lattice element 7 comprises a plurality of beams 72 interconnected with each other. The elementary lattice elements 7 are repeated in a certain spatial pattern to fill a volume.

The unit cell is the smallest unit composing the lattice structure. As such, the design of unit cell has an important effect on the characteristics of a lattice structure, such as mechanical response, specific surface area, stiffness, or pore size. Unit cell design and pattern design are to be considered in the design of the lattice structure.

More precisely, the core lattice portion 32 of the lattice structure is formed by layers of interconnected elementary lattice elements 7. Direct patterning can be used, that is the elementary lattice elements are designed as cubic elements and simply repeated in a three-dimensional domain. Direct patterning is relatively simple and convenient. In other embodiments, other pattern designs may be used, such as conformal patterning or topology optimization. Irregular patterns can be used, for instance a Voronoi patterning.

The lattice structure further comprises a plurality of peripheral lattice portions 35 adjacent to the peripheral walls 42 of the through holes 41, respectively. The peripheral lattice portions 35 comprise a plurality of peripheral lattice elements having shorter beams than the elementary lattice elements 7 of the core lattice portion 32. By 'shorter' beams, it is understood that the beams may have the same diameter, but may be cut in their length, so as not to match the edges of the fitting cube. It is schematically illustrated in figure 4.

The formability of lattice structures by manufacturing methods has to be considered when designing unit cells. Before manufacturing, the lattice structure parameters, such as beam thickness, beam length and net gaps must be uniquely adapted. Indeed, the dimensions of the elementary lattice elements 7 must be sufficient to be manufacturable.

Each elementary lattice element 7 may fit in a cube. We refer to 'dimension' of an elementary lattice element 7 the length of the side of the smallest cube wherein the elementary lattice element 7 can be fitted.

Different dimensions are admissible for the elementary lattice elements 7. For instance, a side of the cube wherein the elementary lattice element 7 can be fitted may have a length comprised between 1 mm and 10 mm. Preferably, the length is comprised between 2 mm and 5 mm, and more preferably the length is around 4 mm.

Preferably, the elementary lattice elements 7 forming a layer of the lattice structure have all the same dimension.

The beams 72 may have the shape of cylinders. We refer to 'beam diameter' or beam thickness as the diameter of the cylinder forming the beam. We refer to 'beam length' as the distance between a first end of the beam (72,82,92) extending from the center of the kernel (71,81,91) and a second end of the beam, opposite to the first end.

The beams 72 of each elementary lattice element 7 may have a diameter comprised between 0.4 mm and 5 mm. Preferably, they have a diameter comprised between 0.8 mm and 2mm, and more preferably a diameter of around 1 mm.

In order to reduce weight, it is ideal to minimize the density of the three-dimensional structure. This can be achieved by reducing the beam diameter and increasing the beam length. However, these two parameters have strong implications on the strength of the three-dimensional structure and are usually constrained by mechanical requirements. The beams 72 may be thick enough to withstand the mechanical constraints, but thin enough to preserve a light structure and allow passage of propellants between the elementary lattice elements. The beam diameter depends on the dimension of the elementary lattice element 7 (or unit cell). For instance, the beam diameter may be of 4.3mm for a unit cell with a side of a length of 8mm.

A side of the cube wherein the elementary lattice element 7 fits may have a length being two to five times larger than a diameter 72 of the beams of the elementary lattice element 7. This also contributes to allow passage of propellants between beams of the elementary lattice elements.

Preferably, all the beams 72 of the elementary lattice element 7 have the same beam diameter. This eases the design process.

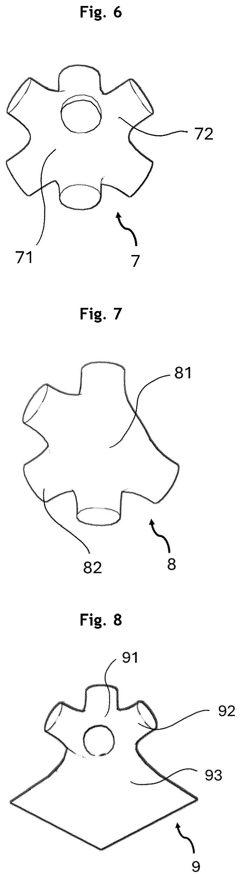

Different geometries of the elementary lattice elements 7 can be considered. Preferably, as illustrated in figure 6, the elementary lattice element 7 is shaped from a body-centered cubic (BCC) unit cell. This unit cell has eight beams.

Alternatively, the elementary lattice element 7 can be shaped from a face-centered cubic (FCC) unit cell. Elementary lattice elements 7 of more complex geometries can be used in the lattice structure, for instance using a hexagonal unit cell or a dodecahedron, also known as diamond cubic unit cell. Combination of body-centered and face-centered cubic unit cells may be used.

Also, the unit cell might not be a cube, for instance tetragonal and orthorhombic unit cells can be used to create the pattern of the three-dimensional structure.

Preferably, the lattice structure comprises aligned interstices. It creates regions of high velocity, for instance up to 5 five times higher than inlet velocity. Additionally, the lattice structure may create a checkboard pattern, meaning that there are alternating regions of low and high velocity. The low velocity regions are caused by recirculation zones. These regions are responsible for an increase in turbulent kinetic energy which increases mixing and convection. It is the case for body-centered cubic unit cell for instance.

The elementary lattice element 7 comprises a kernel 71, at the intersection of a plurality of beams 72 extending from the kernel 71 in various directions. Preferably, the angle formed by two adjacent beams is comprised between 60° and 180°, more preferably between 90° and 120°.

We refer to 'orientation' of a beam the angle formed between the beam and a plane orthogonal to the direction of the injectors 4. Preferably, the beams 72 have an orientation comprised between 30° and 60°, more preferably 45°.

The peripheral lattice elements can correspond to elementary lattice elements 7, for which a beam has been shortened by a cut operation. Preferably, the peripheral lattice elements are designed from the same unit cell as the elementary lattice elements 7.

Preferably, the peripheral lattice elements have the same orientation as the elementary lattice elements 7.

Preferably, the beams of the peripheral lattice elements have the same diameter as the beams of the elementary lattice elements 7. This allows for a smooth connection between the peripheral lattice elements and the elementary lattice elements 7.

The beam length may vary between two beams of the same peripheral lattice element 7. This allows to better fit a desired shape for the injector face plate 3. Also, the beam length may vary between two different peripheral lattice elements. The peripheral lattice elements This allows the lattice structure to fit the form of the desired injector head 2.

Preferably, the injector face plate 3 has an outer peripheral wall 36 extending from the full plate 31 at a periphery thereof, and the lattice structure comprises peripheral lattice portions 35 adjacent to the outer peripheral wall 36.

The presence of the outer peripheral wall 36 enhances the stiffness of the three-dimensional structure. The beams adjacent to the outer peripheral wall 36 are connected to it. The outer peripheral wall 36 also eases the manufacturing process of the injector head 2.

The three-dimensional structure is formed within a specific volume. The specific volume is delimited by an inner surface adjacent to the full plate 31, an outer surface opposed to the inner surface, and a peripheral surface joining the inner surface and outer surface, the plurality of beams 72 interconnected with each other partially filling the specific volume.

For instance, the peripheral surface may be delimited by the outer peripheral wall 36.

Preferably, the full plate 31 has a substantially flat outer surface, while the outer surface of the three-dimensional structure is non-flat.

More precisely, the flat outer surface is the surface of the full plate 31 arranged on the side of the combustion chamber 11, while the non-flat outer surface of the three-dimensional structure faces the interior of the liquid propellant dome 12. For instance, the non-flat outer surface of the injector face plate 3 facing the liquid propellant dome 12 may be formed by a repetition of elementary lattice elements 8.

Preferably, the non-flat outer surface is formed by a plurality of substantially tapered portions. For instance, the non-flat outer surface comprises a regular pattern with a repetition of substantially tapered surface portions St. By substantially, it is understood that the surface does not match the shape of a cone, but that beams form an irregular pattern fitting inside a cone.

The interconnected beams forming the substantially tapered surface portions St may be disposed around the through holes 41 formed through the injector face plate 3 for liquid propellant injection. The tapered surface portions St form advantageously a conic solid support for the peripheral walls 42 of the injectors 4. This contributes to enhance the mechanical stand of the injector face plate 3 and the stiffness of the injector head 2. It is schematically illustrated in figure 5.

In the embodiment where the three-dimensional structure is a lattice structure, the lattice structure may comprise a surface lattice portion 33 adjacent to the outer surface of the three-dimensional structure, wherein the surface lattice portion 33 have surface lattice elements 8 having fewer beams 82 than the elementary lattice elements 7 of the core lattice portion 32.

For instance, the surface lattice elements 8 can have the same unit cell that the elementary lattice elements 7, to which some beams are removed. This may allow the lattice structure to fit the specific volume of the injector face plate 3. In the case where the elementary lattice element 7 has a body-centered cubic structure with eight beams, the surface lattice elements may have only six beams, as illustrated in figure 7. Preferably, the surface lattice element 8 may have at least two beams, to ease the manufacturing process.

Preferably, the three-dimensional structure comprises a connection portion 34 extending from the full plate 31. The connection portion 34 has a plurality of connection lattice elements 9 comprising a tapered base 93 extending from the full plate 31, and a plurality of beams 92 extending from the tapered base 93. An example of connection lattice element 9 is illustrated in figure 8.

Preferably, the plurality of tapered bases 93 of the plurality of connection lattice elements 9 entirely covers the full plate 31, so as to form a smooth connection between the full plate 31 and the three-dimensional structure. The connection lattice elements 9 may only be arranged on one layer adjacent to the full plate 31. The smooth transition supports the full plate 31 and allows to significantly reduce the thickness of the full plate 31, and therefore of the injector face plate 3.

Also, the tapered base 93 of the connection lattice elements 9 strengthen the injector face plate 3 since they act as reinforcement elements. Compared with a configuration where the surface of the full plate 31 facing the inner part of the injector head 2, opposite to the combustion chamber 11, is flat, the presence of tapered bases 92 contribute to increase the surface area, and so the heat transfer by a high magnitude. It improves the maximum pressure that the injector face plate 31 can withstand and helps it to remain at safe temperatures.

In the embodiment where the three-dimensional structure is a lattice structure, the connection lattice elements 9 have preferably the same dimensions as the elementary lattice elements 7. For instance, the connection lattice elements 9 can be fitted in a cube of the same length as the cube fitting the elementary lattice elements 7. Preferably, the beams of the connection lattice elements 9 have the same diameter as the beams of the elementary lattice elements 7. This eases the connection between the connection portion 34 and the core lattice portion 32.

For instance, the dimension of the connection elementary lattice elements 9 can be identical but the beams that connect to the full plate 31 are replaced by a cone-like shape that grows evenly and gradually until it fills the entire full plate 31.

Also, the beams 92 of the connection lattice elements 9 are preferably arranged with the same orientation of the beams 72 of the elementary lattice elements 7. For instance, two adjacent beams 72 of the elementary lattice elements 7 extend forming an elementary cell angle and two adjacent beams 92 of the connection lattice elements 9 extend forming a connection cell angle identical to the elementary cell angle.

However, all connection lattice elements 9 might not be identical. In particular, they do not necessarily need to have all four beams. The number of beams depends on the number of lattice elements from a different layer that connect to the connection lattice element 9. In some cases, the connection lattice element 9 can have only one beam. Preferably, the tapered base 93 is identical for all connection lattice elements 9.

With the apparition of additive manufacturing technologies, it is now possible to manufacture the components by printing the complex metallic shape layer-by-layer.

Different metallic manufacturing processes were developed. Among them, powder-bed based technology is preferably used for the manufacturing for this application. For instance, Laser Powder Bed Fusion consists in selectively melting a powder deposited layer by layer using a laser. More precisely, horizontal layers of loose metal powder are fused through laser sources in a consecutive way to create the complex three-dimensional shape.

The injector face plate 3 may be manufactured from different materials. Preferably, it is made from a metallic alloy. For instance, Inconel^{®} alloys, monel, or copper alloys. Copper alloy show higher thermal conductivity. Among others, Inconel 718^{®} can be advantageously used, due to its good properties and high technology readiness level (TRL).

Advantageously, the injector face plate 3 is fully obtained by additive manufacturing.

Additive manufacturing allows creating shapes with a higher level of complexity, and in particular to obtain various inner structures. It offers numerous advantages over traditional methods, including reduced schedules, lower lifecycle costs, and enhanced performance due to intricate internal features. Moreover, the high surface roughness of injector face plate 3 obtained by the additive manufacturing improves the heat transfer and enhances a fast cooling of the injector face plate.

Using additive manufacturing also gives more freedom in the design. Conventional manufacturing technologies are concerned by a lot of design constraints. The design constraints prevent to reach an optimum thermal and mechanical behavior of the head injector 2.

Furthermore, using lattice structures allow for design improvement, e.g. to achieve sophisticated lightweight design.

Preferably, the injector face plate 3 is obtained by Laser Powder Bed Fusion (L-PBF). It utilizes a method, where the interconnected beams of the three-dimensional structure are fused layer by layer using a laser. This technology allows for a fine process resolution and is capable of realizing a good and suitable size resolution for the three-dimensional structure, and particularly the elementary lattice elements 7.

In the embodiment where the injector face plate 3 comprises a connection portion 34, a further advantage is that there is no need to remove the additive manufacturing support structure. Indeed, additive manufacturing is not able to print unsupported flat surface during the bottom-up stratification process. This would be the case for the full plate 31 if the injector face plate 3 is printed in a direction parallel to the additive manufacturing building direction. Because of this limitation, a removable or fixed support is required. In this embodiment, it is possible to print the injector face plate 3 in such a way that the three-dimensional structure behaves also as the support required by the manufacturing process. The present invention also concerns an injector head 2 for a propulsive system 100, comprising the injector face plate 3 in any one of the embodiments herein described a liquid propellant dome 12 and a plurality of injectors 4 arranged through the injector face plate 3, wherein the injector head 2 is monobloc and fully obtained by additive manufacturing.

Using additive manufacturing, the injector head 2 can be made as a single component, so there is no need to manufacture and assemble several elements made of different materials. The risk of failure of the component is reduced since there is no need to seal. Also using a single material avoids any complex dissimilar material interactions, such as different thermal expansion coefficients, that could cause damage to the structure of the injector head 2.

The manufacturing is faster and easier since there is no assembly of different elements and since no additional procedure, such as electroplating or thermal barrier coating (TBC), is necessary. It reduces the costs of manufacturing and integration.

The present invention also concerns a thrust chamber 1 for a propulsive system 100, comprising a combustion chamber 11, and the injector head 2, the injector head 2 being disposed between the combustion chamber 11 and the liquid propellant dome 12.

The full plate 31 of the injector face plate 3 of the injector head 2 is facing the combustion chamber 11. For instance, the flat surface of the full plate 31 faces the combustion chamber 11, while the outer lattice portion is disposed inside the liquid propellant dome 12.

Another aspect of the invention is a propulsive system 100 comprising a liquid propellant tank 5,6, a pressurization device 51,61, and the thrust chamber 1 described above, the pressurization device 51,61 being configured to inject a propellant stored in the liquid propellant tank 5,6 into the thrust chamber 1.

The pressurization device might be an electric pump (e-pump), a turbopump, or any other device allowing to inject the liquid propellant at a sufficient pressure. For instance, the propulsive system 100 might use other cycles like pressure fed. Alternatively, the pressure is stored directly in the (pressure-fed) tanks 5,6.

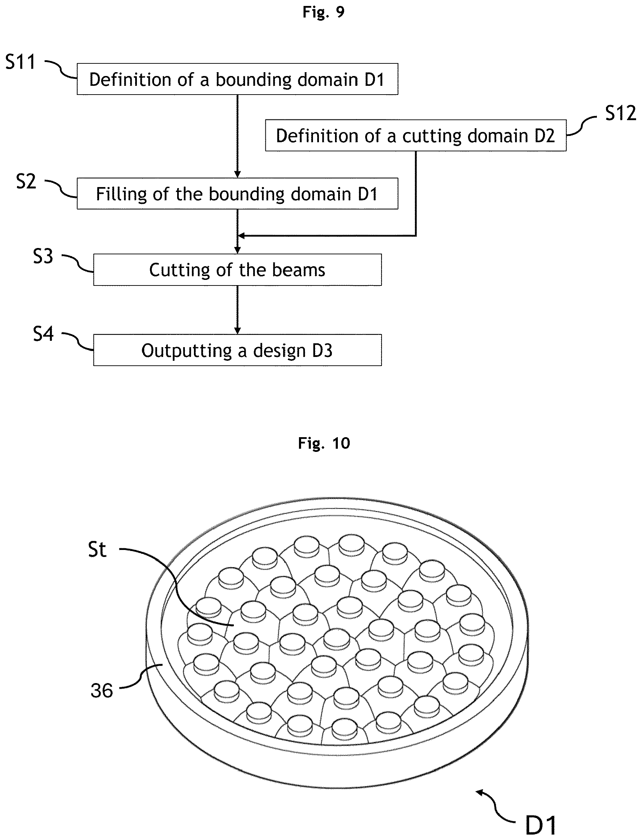

The present invention also concerns a method of designing the injector face plate 3 in any one of the embodiments described herein. In reference to figure 9, the design method comprises the steps of:
- defining S11 a bounding domain D1, corresponding to the injector face plate 2,
- filling S2 the bounding domain D1 with a full plate 31 and a plurality of beams 72 interconnected with each other,
- defining S12 a cutting domain D2, corresponding to injectors 4 to be arranged through the injector face plate 3,
- cutting all beams and portions of the full plate 31 extending in the cutting domain D2,
- Outputting S4 a design D3 of the injector face plate 3.

The creation of the design D3 starts off by defining the bounding domain D1 that is to be filled with interconnected beams. For instance, the bounding domain D1 comprises the substantially tapered surface portions St supporting the injectors 4. For illustrative purpose, a bounding domain D1 in this embodiment is given in figure 10.

The bounding domain D1 may be bigger than the injector face plate 3 to be obtained. It helps assuring that the beams of the elementary lattice elements 7,8,9 are connected and fill the injector face plate 3 entirely. It is possible since in step S3, the elementary lattice elements in excess are cut.

From the bounding domain D1, it is possible to compute a bounding box.

In the embodiment where the three-dimensional structure is a lattice structure, the step S2 may comprise a step of subdividing the bounding box in cubes wherein each elementary lattice element 7 can be fitted. The length of a side of the cube corresponds to the unit cell dimension.

Preferably, the step S2 comprises a step of defining the parameters characterizing the elementary lattice elements. As known per se, it defines the structural properties of the lattice structure. The unit cell dimension might be comprised between 1 mm and 10 mm, preferably comprised between 2 mm and 5 mm, and more preferably 4 mm. For instance, the cube fitting an elementary lattice element can have a volume of 64mm³.

The beam dimension depends on the size of the injector face plate 3, and of the distance between two adjacent injectors 4. For instance, a maximum size for an elementary lattice element 7 could be set to half of the distance between two injectors 4, so that at least two elementary lattice elements 7 may hold between injectors 4. Note that the schematic representations given in Figures 4a, 4b are only given for illustrative purposes.

The subdivision in cubes might correspond to a location of each elementary lattice element. In the embodiment where the elementary lattice elements are shaped from a body centered cubic structure, the position is advantageously shifted by half a length of the cube side, for instance by 2mm, between two successive layers of the lattice structure, such that the beams interconnect with each other.

Using the subdivision allows to compute beforehand how many elementary lattice elements are needed to fill the bounding domain D1.

In the embodiment where the injector faceplate 3 comprises the connection portion 34 with the plurality of connection lattice elements 9 comprising a tapered base 93, the connection portion 34 might form a bottom layer of the three-dimensional structure. Preferably, the bottom layer grows evenly and gradually until the plurality of tapered bases 93 cover the entire full plate 31. It helps supporting the structure of the injector face plate 3, and since the full plate 31 is not an overhang, the support structure is not required anymore.

In the embodiment where the three-dimensional structure is further a lattice structure, the connection lattice elements 9 and the elementary lattice elements 7 can be tiled and layered to fill the entire bounding domain D1.

Advantageously, the step S2 comprises a regularization step wherein all hanging beams of the elementary lattice elements 7 are removed. For instance, if an elementary lattice element 7 is in a position in which adjacent elementary lattice elements are missing above the elementary lattice element, the beams of the elementary lattice element are removed. They correspond to surface lattice elements 8.

The present invention also concerns a computer program containing instructions for designing an injector face plate 3 following the steps described above. Advantageously, the computer program is configured to generate a three-dimensional structure with non-homogenous interconnected beams.

The cutting domain D2 is defined to adjust the volume of the generated three-dimensional structure fitting the bounding domain D1 to the injector head 2. An example of the cutting domain D2 is illustrated in figure 10. The cutting domain D2 may comprise domains to cut for delimiting the injectors 4, the igniter 17 or a pipe 18 allowing to input measurement systems like thermos-couples and/or pressure sensors.

In other words, all beams that are partially or fully outside the lattice domain are completely removed. This allows to prevent any partial beams to be generated which would create overhang surfaces. Since the removal of beams is very dependent on the location of the unit cell in the bounding box, the lattice element may have a different number of beams. However, the design cannot allow large overhangs, so surface lattice elements 8 has at least one beam growing away from the injector faceplate 3, to ensure that it is supported.

Preferably, the geometry of the lattice structure is then updated. The regularization step is advantageous to ensure the design can be manufactured. It prevents the presence of overhanging surfaces with no support inside the generated design.

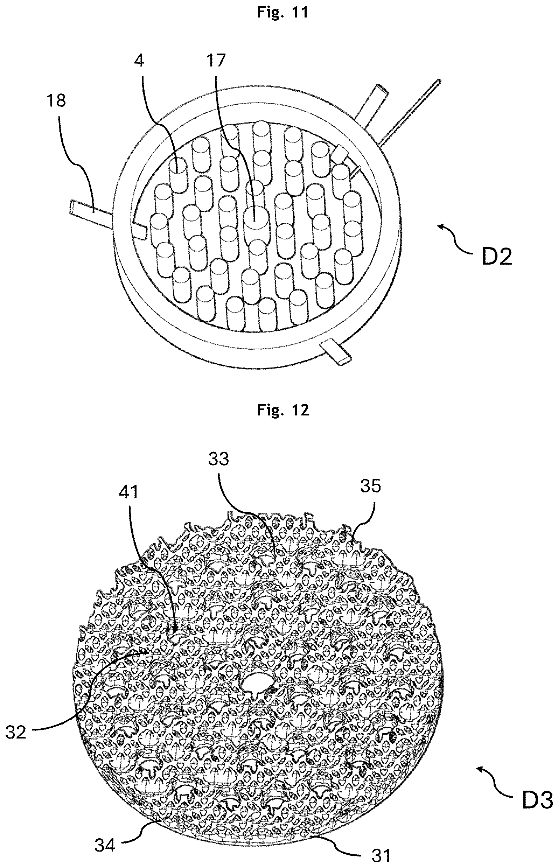

The generated design D3 may be manufactured. Preferably, the design D3 is manufactured using an additive manufacturing process. An example of a design outputted by the design process is given in figure 12.

Using additive manufacturing imposes constraints, and restrictions are imposed by the manufacturing process. For instance, in an embodiment where the injector face plate 3 is obtained by Laser Powder Bed Fusion, it is not possible to design surfaces extending below a certain angle, for instance 40°, with respect to the horizontal plane. A support structure would be required for lower values such as 35°, to prevent the print quality to deteriorate rapidly.

Hereafter is also described a method of manufacturing an injector head 2 for a propulsive system 100, wherein the injector head 2 comprises an injector face plate 3, a liquid propellant dome 12 and a plurality of injectors 4 arranged through the injector face plate 3, wherein the injector head 2 is fully obtained by additive manufacturing by using the design of the injector face plate 3 described previously.

Preferably, the injector head 2 is printed with the injector faceplate 3 facing towards the top. In other words, the walls forming the liquid propellant dome 12 are printed using additive manufacturing. Then, the elementary lattice elements are printed, simultaneously with the peripheral walls 42 of the injectors 4. The plurality of beams may initially start growing from the peripheral walls 42 and the walls of the liquid propellant dome 12.

The manufacturing methods allows to produce an injector head 2 in one single part, that is a monobloc component.

The injector head 2 is made of a resistant material, preferably a high-strength metallic alloy, and more preferably a nickel-based alloy such as Inconel 718. The manufactured injector head 2 benefits from a regulated mechanical and thermal behavior thanks to the designed lattice structure.

Due to the increased heat transfer, there is no specific need to employ highly conductive materials, such as copper alloys, and to use a multi-material additive manufacturing process. The manufacturing method advantageously does not need to use active cooling systems or additional manufacturing processes. This minimizes the complexity of the design and of the manufacturing, increases performance and reduces the overall cost.

More generally, in an embodiment where the injector face plate 3 is manufactured by Laser Power Bed Fusion, the manufacturing process begins with a 3D-CAD model or design D3. The design D3 is sliced into thin 2D layers, guiding the path for fusing the beams. An energy source melts the metal powder, forming each layer according to the cross-section of the beam. A build plate initiates bonding, and after each layer, it descends slightly for the next powder layer and laser fusion. Sufficient power ensures proper bonding between layers, allowing for intricate internal features such as coolant channels. The fabrication occurs in an inert environment to prevent oxidation. L-PBF production allows delicate steering of the energy source, for instance an assembly of high-power fiber laser and scanner optics, to reach geometrical, thermal and mechanical performance. To achieve this, melting is controlled to create reasonable inner microstructure and surface quality.

The proposed manufacturing method does not require the injector head 2 to incorporate an internal additive manufactured regenerative cooling system, like regenerative cooling systems of the combustion chamber 11 known in prior art, or more prevalent film cooling systems. However, it might pose severe technical difficulties. It could lead to a decrease in overall efficiency of the propulsive system 100 due to the necessity of an additional mass flow rate to cool the injector face plate 3. Moreover, achieving the required tolerances for the regenerative cooling system through additive manufacturing processes would be difficult, and high-pressure drops are expected, further diminishing efficiency. The regenerative cooling system could encounter issues during the de-powdering process, that is when extracting non-fused powder after the additive manufacturing process. It would complicate the manufacturing process.

According to the proposed manufacturing method, the injector head 2 can be printed in one part, with only one material and without any other processes, while keeping the design lightweight but strong enough to withstand the high pressure in the combustion chamber 11. The manufacturing method advantageously reduces costs significantly in comparison to existing solutions.

More generally, the design method and the manufacturing method could be applied to any 3D printed structure that requires high amounts of heat transfer and mechanical strength. It is especially suited in cases requiring overhanging portions.

## Claims

1. An injector face plate (3) of an injector head (2) for a propulsive system (100), **characterized in that** the injector face plate (3) comprises a full plate (31) and a three-dimensional structure extending from the full plate (31), the three-dimensional structure comprising a plurality of beams (72) interconnected with each other.

2. The injector face plate (3) of claim 1, further comprising a plurality of through holes (41) for liquid propellant injection, each through hole (41) being delimited by a peripheral wall extending from the full plate (31), respectively, and wherein beams (72) from the three-dimensional structure are connected to the peripheral walls of the plurality of through holes (41).

3. The injector face plate (3) of claim 2, wherein the three-dimensional structure is a lattice structure, the lattice structure comprising a core lattice portion (32) and a plurality of peripheral lattice portions adjacent to the peripheral walls of the through holes, respectively, the core lattice portion (32) being formed by a repetition of elementary lattice elements (7), each elementary lattice element (7) comprising a plurality of beams (72) interconnected with each other, and the peripheral lattice portions comprising a plurality of peripheral lattice elements having shorter beams than the elementary lattice elements (7) of the core lattice portion (32), the injector face plate (3) preferably having an outer peripheral wall extending from the full plate (31) at a periphery thereof, and the lattice structure comprising peripheral lattice portions adjacent to the outer peripheral wall.

4. The injector face plate (3) of claim 3, wherein each elementary lattice element (7) fits in a cube, a side of the cube having a length comprised between 1 mm and 10 mm, preferably a length comprised between 2 mm and 5 mm, and more preferably a length of 4 mm, or a side of the cube having a length being 2 to 5 times larger than a diameter of the beams (72) of the elementary lattice element (7).

5. The injector face plate (3) of any one of claims 3 or 4, wherein each elementary lattice element (7) is a unit cell having a structure among a body centered cubic, a face-centered cubic, a dodecahedron or a combination thereof.

6. The injector face plate (3) of any one of claims 1 to 5, wherein the three-dimensional structure is formed within a specific volume being delimited by an inner surface adjacent to the full plate (31), an outer surface opposed to the inner surface, and a peripheral surface joining the inner surface and outer surface, the plurality of beams (72) interconnected with each other partially filling the specific volume, the full plate (31) preferably having a substantially flat outer surface and the outer surface of the three-dimensional structure being preferably non-flat.

7. The injector face plate (3) of claim 6, wherein the non-flat outer surface is formed by a plurality of substantially tapered portions.

8. The injector face plate (3) of any one of claims 5 to 7 in combination with claim 3, wherein the lattice structure comprises a surface lattice portion (33) adjacent to the outer surface of the three-dimensional structure, wherein the surface lattice portion (33) comprises surface lattice elements (8) having fewer beams (82) than the elementary lattice elements (7) of the core lattice portion (32).

9. The injector face plate (3) of any one of claims 1 to 8, wherein the three-dimensional structure comprises a connection portion (34) extending from the full plate (31), the connection portion (34) having a plurality of connection lattice elements (9) comprising a tapered base (93) extending from the full plate (31) and a plurality of beams (92) extending from the tapered base (93), the plurality of tapered bases (93) of the plurality of connection lattice elements (9) preferably entirely covering the full plate (31), so as to form a smooth connection between the full plate (31) and the three-dimensional structure.

10. The injector face plate (3) of claim 9 in combination with claim 3, wherein the connection lattice elements (9) have the same dimensions as the elementary lattice elements (7), the beams (92) of the connection lattice elements (9) being arranged with the same orientation as the beams (72) of the elementary lattice elements (7).

11. The injector face plate (3) of any one of claims 1 to 10, wherein the three-dimensional structure has a relative density comprised between 0,05 and 0,8, preferably between 0,2 and 0,3.

12. The injector face plate (3) of any one of claim 1 to 11, being fully obtained by additive manufacturing, preferably by Laser Powder Bed Fusion.

13. An injector head (2) for a propulsive system (100), comprising the injector face plate (3) of any one of claim 1 to 12, a liquid propellant dome (12), and a plurality of injectors (4) arranged through the injector face plate (3), wherein the injector head (2) is monobloc and fully obtained by additive manufacturing.

14. A thrust chamber (1) for a propulsive system (100), comprising a combustion chamber (11), and the injector head of claim 13, the full plate (31) of the injector head (2) facing the combustion chamber (11) opposite to the liquid propellant dome (12).

15. A propulsive system (100) comprising a liquid propellant tank (5,6), a pressurization device (51,61), and the thrust chamber of claim 14, the pressurization device (51,61) being configured to inject a propellant stored in the liquid propellant tank (5,6) into the thrust chamber (1).

16. A method of designing an injector face plate (3) according to any one of claims 1 to 15, the method comprising the steps of:
- defining (S11) a bounding domain (D1), corresponding to the injector face plate (3),
- filling (S2) the bounding domain (D1) with a full plate (31) and a plurality of beams (72) interconnected with each other,
- defining (S12) a cutting domain (D2), corresponding to injectors (4) to be arranged through the injector face plate (3),
- cutting (S3) all beams and portions of the full plate (31) extending in the cutting domain (D2),
- outputting (S4) a design (D3) of the injector face plate (3).

17. A method of manufacturing an injector head (2) for a propulsive system (100), wherein the injector head (2) comprises an injector face plate (3) and a plurality of injectors (4) arranged through the injector face plate (3), wherein the injector head (2) is fully obtained by additive manufacturing by using the design (D3) of the injector face plate (3) obtained by the designing method of claim 16.
